# EUROPEAN PATENT APPLICATION

(11) **EP 1 621 113 A1**
(43) Date of publication of application: **01.02.2006**
(21) Application number: 05106862.5
(22) Date of filing: 26.07.2005
(51) Int. Cl.: A47J 17/18

(54) **Device for surface cleaning of food products**

(30) Priority: 29.07.2004 IT MI20040367
(71) Applicant: OEM - Ali S.p.A, 20123 Milan (IT)
(72) Inventor: BERTI, Luciano Achille Luigi, 20060, BUSSERO (Milan) (IT)
(74) Representative: De Gregori, Antonella

(57) **Abstract**

Device for surface cleaning of food products comprising a treatment case (13) provided with an upper opening (30) and a closing cover (14) in which an inner abrasive rotating plate (17) for food products treatment is contained, said device provided with a support (26) freely removable from the case (13) having pre-selected abrasive elements or portions (27).

## Description

The present invention refers to a device for surface cleaning of food products.

In the present invention, the generic expression "device for surface cleaning of food products" refers to a multitask device. As a matter of fact, in the treatment of various food products, it can be required either to remove the peel from a food product, such as potato or the like, or to remove surface elements from a different food product, such as sediments on mussels or the like. It is therefore required to remove either a part of the product directly connected with the pulp or connected to the product being eaten, or additional non-food elements which must be removed prior to a successive step, such as cooking.

To the purpose, different kind of devices have been employed, provided with fixed containing parts, which devices have, in their inside, cutting elements and/or presenting abrasive materials that, while the products are rotating, determine the removal of the part to be eliminated.

The common nuisance of that kind of devices is that the substitution of the abrasive or cutting parts is not easy and rapid, since often they are directly positioned on the inside walls.

Moreover, the cleaning of the device is very hard to perform due to the presence of the abrasive parts which are fixed by means of screws to the inside walls and therefore a full hygiene or cleaning can not be achieved.

Aim of the present invention is that of realizing a device for surface cleaning of food products, as aforesaid, that allows to overcome the drawbacks above described.

Another aim of the present invention is that of realizing a device for the surface cleaning of food products that speeds the action of substitution of the abrasive part or that performs the removal of the part to be eliminated from the food product.

A further aim of the present invention is that of realizing a device for surface cleaning of food products which is extremely low cost and simple to use. Another aim is that of realizing a device for surface cleaning of food products which allows a prompt and easy cleaning.

The above purposes are achieved, according to the present invention, realizing a device for surface cleaning of food products as disclosed in claim 1.

The further claims describe the additional features of the present invention.

The characteristics and advantages of a device for surface cleaning of food products according to the present invention will become clearer from the following illustrative and non-limiting description referring to the schematic drawings, in which:

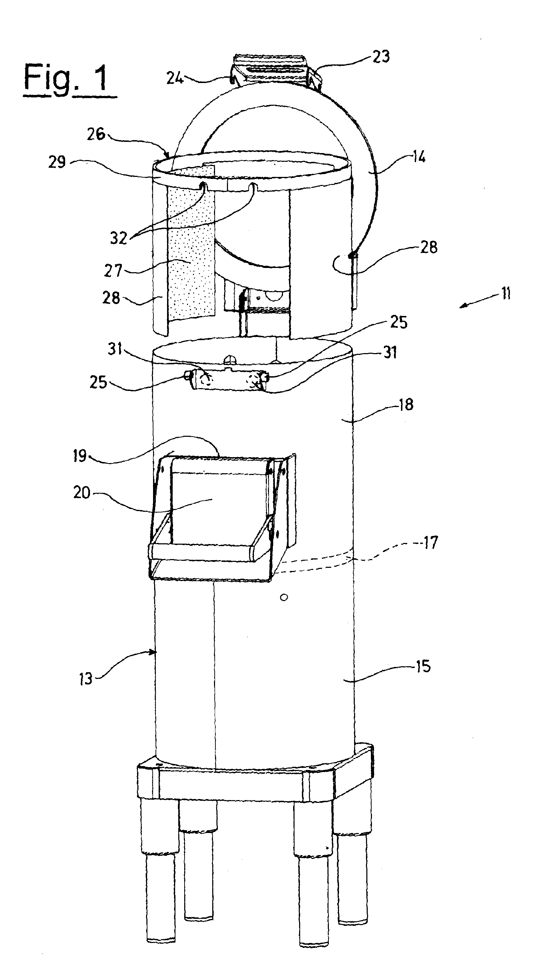

Figure 1 is a front perspective view of a device for surface cleaning of food products, according to the present invention supported by an abrasive substance or element, exploded by its body;

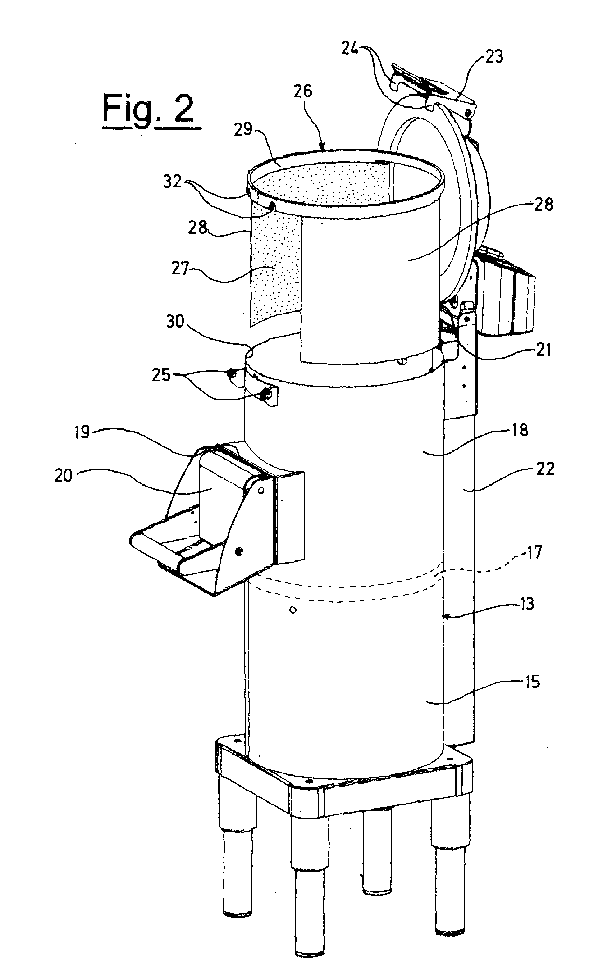

Figure 2 is a lateral prospective view of a device for surface cleaning as shown in figure 1; and

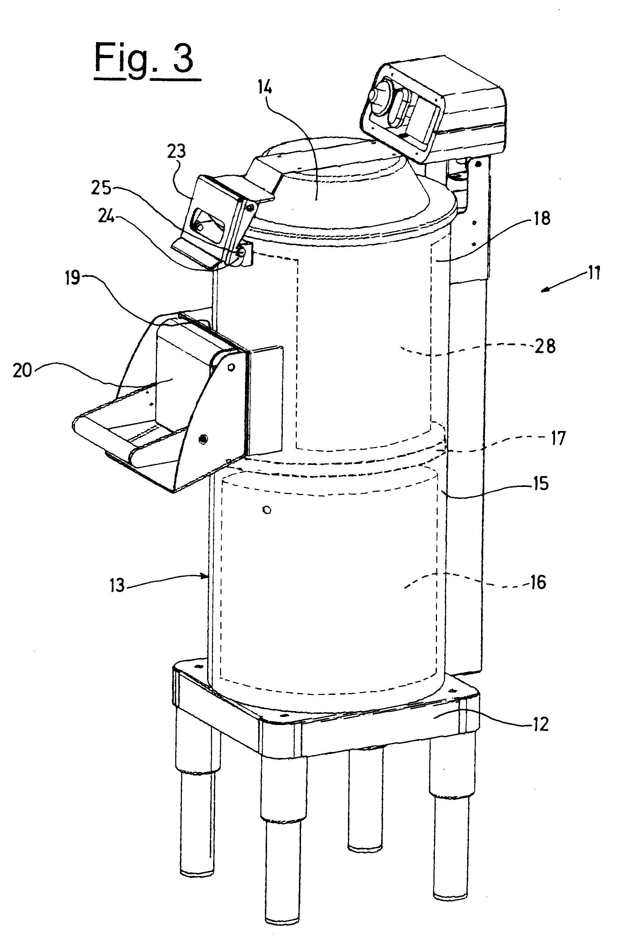

Figure 3 is a perspective view similar to that of figure 2 in which the device is re-closed in a way to contain the support of an abrasive substance or element, indicated with dashed and dotted lines.

With reference to the figures and according to the present invention, a device for surface cleaning of food products is shown, wholly indicated with 11.

The device comprises a base structure 12 on which a treatment case 13 is positioned opened towards the top 30 and provided with a closing cover 14.

The treatment case 13 foresees, in its lower portion 15, a drive control 16, represented and indicated with dashed and dotted lines, for the turning of a rotating inner plate 17, provided with abrasive material also indicated with dashed and dotted lines. In an upper portion 18 of the treatment case 13 is also foreseen an opening of depletion 19 having a rotatable door 20, manually operable.

As aforesaid, a closing cover 14 is connected through a hinge 21 rotatable with an upper end of a back shaft 22 and foresees, in the position opposed to that of the hinge 21, a click closing grip 23. Said grip 23 engages, by means of its curved ends 24, pivots 25 located on the outside part of the upper portion 18 of the treatment case 13.

Moreover, according to the present invention, a support 26 is provided, freely insertable in the treatment case 13 and showing abrasive elements or portions 27. In the example shown, the support 26 foresees a ring 29 that supports two half-shells 28 in which are provided the above mentioned abrasive elements or portions 27. The half-shells 28 can be of course of indefinite number, without changing the inventive concept of the device. The ring 29 presents an outer diameter lower than the inner diameter of the upper opening 30 of the treatment case 13. The abrasive elements or portions 27 can be of different kind or can be of different grain, according to the product to be peeled off or abraded. It can be noticed also that the inner rotating plate 17 shows abrasive material and it is freely removable from the treatment case 13.

In particular, said half-shells 28 have an extension which is lower than the extension of the inside part of the upper portion 18 of the treatment case 13 and can be easily inserted by way of the upper opening 30 of the treatment case 13.

It can be also noticed that inside the treatment case 13, for instance in correspondence with the pivots 25 for locking the closing cover 14, further pivots are provided or pawls 31 radial to the inside to receive concavities 32 realized on the ring 29 of the support 26.

It is easy to perceive how such a disposition allow a lot of real advantages with respect to the known art.

Firstly, in fact, the support 26 can be replaced simply inserting or extracting it from the treatment case 13 and locking it on the pivots or pallets 31, which are inside the treatment case 13. The locking elements and the screws have been in fact eliminated, which in the known devices cause nuisance.

Secondly, a plurality of supports 26 are provided, having different characteristics of abrasive elements or portions 27, with more or less abrasive characteristics, so as of different size of the two half-shells 28.

With the possibility to vary the abrasive level it is possible to simply remove the external peel from fruit or the surface portion of some not extremely hard food products or alternatively to remove the sediments on mussels or the like.

Thirdly, once the support 26 has been removed, without removing locking elements or screws, it is extremely easy and simple to proceed with the extraction and the cleaning of the plate and of the inside bottom of the device, with absolute hygiene and simplicity.

In this way, a general device for surface cleaning of food products is realized, suitable to be adapted to different applications.

A device for surface cleaning of food products as conceived, is subjected to numerous modifications and variations, all comprised in the same inventive concept.

Moreover, the materials practically used, as well as size and components, can be whichever according to the technical requirements.

## Claims

1. Device for surface cleaning of food products comprising a treatment case(13), provided with an upper opening (30) and a closing cover (14) in which an inner abrasive rotating plate (17) for food products treatment is contained, **characterized in that** it is provided with a support (26) freely removable from the case (13) having pre-selected abrasive elements or portions (27).

2. Device, according to claim 1, **characterized in that** said support (26) foresees a ring (29) which supports at least a half-shell (28) in which are provided said abrasive elements or portions (27).

3. Device, according to claim 2, **characterized in that** said ring (29) foresees positioning concavities (32) with respect to radial pivots or pawls (31) inserted in said treatment case (13) and projecting externally.

4. Device, according to claim 2 or 3, **characterized in that** said ring (29) has the outer diameter lower than the inner diameter of said upper opening (30) of said treatment case (13).

5. Device according to claim 3, **characterized in that** said closing cover (14) foresees a click closing grip (23) with two curved ends (24) for engaging further pivots (25) placed outside the case in correspondence with said radial pivots or pawls (31) for the positioning of said support (26) in said treatment case (13).

6. Device according to claim 1 or 2, **characterized in that** said abrasive elements or portions (27) placed on said support (26) are of different material or grain.

7. Device according to claim 1, **characterized in that** said inner rotating plate (17) shows abrasive material and it is freely removable from said treatment case (13).

8. Support (26) for a device for surface cleaning of food products **characterized in that** it foresees a ring (29) which supports at least a half-shell (28) in which are provided abrasive elements or portions (27) freely removable from said device for surface cleaning of food products.
